(19) Europäisches Patentamt
European Patent Office
Office européen des brevets

(11) **EP 0 542 643 B1**

(12) **FASCICULE DE BREVET EUROPEEN**

(45) Date de publication et mention de la délivrance du brevet:
**21.01.1998 Bulletin 1998/04**

(51) Int Cl.⁶: **C09C 3/04**, C09C 1/02

(21) Numéro de dépôt: **92420401.9**

(22) Date de dépôt: **06.11.1992**

(54) **Agent de broyage et/ou de dispersion à base de polymères et/ou copolymères neutralisés en partie par du magnésium pour suspensions aqueuses de matériaux minéraux en vue d'applications pigmentaires**

Mahl- und/oder Dispersionshilfsmittel auf Basis von Polymeren und/oder teilweise durch Magnesium neutralisierten Kopolymeren für wässerige Suspensionen von mineralen Materialien, welche sich eignen für pigmentäre Anwendungen

Grinding and/or dispersion aid based on polymers and/or copolymers partially neutralised by magnesium for aqueous suspensions of mineral materials which are convenient for pigmentary applications

(84) Etats contractants désignés:
**DE ES GB IT PT SE**

(30) Priorité: **12.11.1991 FR 9114137**
**12.11.1991 FR 9114140**

(43) Date de publication de la demande:
**19.05.1993 Bulletin 1993/20**

(73) Titulaire: **COATEX S.A.**
**F-69730 Genay (FR)**

(72) Inventeurs:
- **Egraz, Jean-Bernard**
**F-69130 Ecully (FR)**
- **Mongoin, Jacques**
**F-69410 Champagne-au-Mont d'Or (FR)**
- **Ravet, Georges**
**F-69290 Saint-Genis-les-Ollieres (FR)**

(56) Documents cités:
**EP-A- 0 100 947     EP-A- 0 127 388**
**EP-A- 0 185 458     EP-A- 0 261 039**
**EP-A- 0 380 430**

## Description

La présente invention concerne un agent amélioré de broyage et/ou de dispersion en suspension aqueuse de matériaux minéraux grossiers permettant d'obtenir une suspension aqueuse de particules minérales affinées, destinée à des applications pigmentaires telle qu'une suspension aqueuse de carbonate de calcium dont la teneur en matière sèche est d'au moins 70% en poids, dont au moins 90% des particules constitutives après broyage ont une dimension inférieure à deux microns, tandis qu'au moins 60% d'entre elles ont une dimension inférieure à un micron.

L'invention concerne également un procédé de broyage en milieu aqueux de matériaux minéraux grossiers, en présence dudit agent de broyage hydrosoluble. Ledit procédé conduit à des suspensions aqueuses de matériaux minéraux dont la viscosité reste stable dans le temps même si les suspensions ne sont pas maintenues sous agitation, assurant ainsi une grande facilité de manipulation et d'application. Ledit procédé s'applique particulièrement bien au broyage d'une suspension aqueuse de carbonate de calcium dont la teneur en matière sèche est d'au moins 70% en poids, dont au moins 90% des particules constitutives après broyage ont une dimension inférieure à deux microns, tandis que 60% au moins d'entre elles ont une dimension inférieure à un micron. De plus, cette invention concerne les suspensions aqueuses de particules minérales obtenues par ledit procédé ainsi que leurs applications.

Depuis longtemps déjà, il est connu d'utiliser des substances minérales telles que les carbonates de calcium ainsi que le dioxyde de titane pour la préparation de produits industriels destinés aux domaines des peintures, de l'enduction du papier, des charges pour caoutchoucs et résines synthétiques, ou autres.

Mais, comme ces substances minérales ne possèdent pas une structure naturelle lamellaire ou feuilletée facilitant leur délitage, comme c'est le cas de certaines substances telles que les silicates d'aluminium habituellement connus sous le nom de kaolin, l'homme de l'art, pour pouvoir les utiliser dans le domaine pigmentaire, doit les transformer par broyage en une suspension aqueuse de grande finesse dont les grains constitutifs ont une dimension la plus faible possible, c'est-à-dire inférieure à quelques microns.

Par le nombre des publications faites dans ce domaine, la littérature spécialisée révèle l'importance et la complexité du broyage en milieu aqueux de substances minérales pour obtenir une qualité partiellement affinée autorisant une application pigmentaire. C'est ainsi que, dans le cas particulier de l'enduction des papiers, il est bien connu que la masse d'enduction formée de pigments minéraux tels que les kaolins, le carbonate de calcium ainsi que le dioxyde de titane mis en suspension dans l'eau contient également des agents liants et dispersants, ainsi que d'autres adjuvants tels que des épaississants et des agents de coloration. Or, il est souhaitable qu'une telle suspension dispose d'une viscosité faible et stable pendant la durée de stockage pour en faciliter la manipulation et l'application, de même qu'une teneur en matière minérale la plus élevée possible afin de diminuer la quantité d'eau manipulée. Une telle suspension, idéale, réunissant toutes ces qualités fondamentales, résoudrait pour l'homme de l'art les problèmes bien connus de broyage, de stockage, de transport du lieu de production vers le lieu d'application, enfin de transfert par pompe lors de son utilisation.

Ainsi, jusqu'à présent, l'homme de l'art connait l'utilisation d'agents de broyage et/ou de dispersion aqueuse de particules minérales constitués par des polymères et/ou copolymères acryliques totalement ou partiellement neutralisés par divers agents de neutralisation (brevets FR2539137, FR2531444, FR2603042).

L'homme de l'art connait aussi l'utilisation d'un agent de broyage et/ou de dispersion constitué par la fraction des polymères et/ou copolymères acryliques alcalins totalement neutralisés par un seul cation, et dont la viscosité spécifique est comprise entre 0,3 et 0,8 (brevet FR2488814), ou partiellement neutralisés par un seul cation tel que le sodium, le potassium, le lithium ou l'ammonium (EP0127388; EP0185458).

Ces divers types d'agents de broyage et/ou de dispersion de l'art antérieur ainsi que d'autres procédés de traitement ou de broyage connus de l'homme de l'art (EP0278880 ; FR 2642415) permettent d'obtenir des suspensions aqueuses de particules minérales affinées, considérées jusqu'à maintenant comme stables dans le temps mais pour lesquelles l'utilisateur éprouve certaines difficultés de manipulation car il est amené à stocker ces suspensions plusieurs jours ou semaines sans agitation et se retrouve ainsi confronté à l'augmentation de la viscosité de la suspension non agitée.

En effet, dans l'art antérieur, la mesure de la viscosité de la suspension aqueuse de particules minérales était habituellement effectuée à l'aide d'un viscosimètre Brookfield type RVT à une température de 20°C et une vitesse de rotation du mobile n°3 de 100 tours par minute :

(a) à la sortie du broyeur,
(b) après huit jours de repos dans le flacon et après une agitation préalable de la suspension laissée au repos.

Ces deux paramètres de mesure n'ont pas permis de mettre en évidence "l'augmentation de la viscosité" de la suspension aqueuse minérale néfaste pour l'utilisateur ayant à manipuler des suspensions concentrées stockées depuis plusieurs jours sans agitation, et caractérisée par une viscosité Brookfield avant agitation supérieure à 2000 mPa. s pour une mesure effectuée à 10 tours par minute.

Confrontée à ces inconvénients, la Demanderesse a alors constaté que les suspensions aqueuses minérales obtenues selon l'art antérieur avaient des viscosités Brookfield élevées si la mesure s'effectuait sans agitation préalable de la suspension, ce qui est généralement le cas auquel l'utilisateur de ces suspensions doit faire face.

Forte de cette constatation, la Demanderesse a alors mis au point un agent de broyage et/ou de dispersion ainsi qu'un procédé de broyage en présence dudit agent permettant, de manière surprenante, de réaliser des suspensions minérales aqueuses répondant aux critères de qualité précités.

De manière surprenante, les buts de l'invention sont obtenus lorsque le pourcentage de neutralisation des sites acides actifs du polymère par un agent de neutralisation contenant l'ion magnésium est compris entre 40 et 60%, bornes incluses, tandis que le pourcentage de neutralisation des sites acides actifs du polymère par un agent de neutralisation contenant l'ion sodium est inférieur ou égal à 60%.

Ainsi, un des buts de l'invention est de fournir un agent amélioré de broyage et/ou de dispersion en suspension aqueuse de matériaux minéraux grossiers de viscosité restant sensiblement identique dans le temps.

Un autre but de l'invention est de fournir un procédé de broyage en suspension aqueuse de particules minérales. Ces suspensions, destinées à des applications pigmentaires dont au moins 90% des particules ont une dimension inférieure à deux microns et dont au moins 60% d'entre elles ont une dimension inférieure à un micron, selon l'invention, ont une viscosité faible et stable dans le temps, même sans agitation, à savoir une viscosité après huit jours au repos du même ordre que celle obtenue à la sortie du broyeur en fin de broyage.

Enfin, un autre but de l'invention concerne l'utilisation de ces suspensions aqueuses minérales affinées au domaine de la charge de masse et du couchage du papier ainsi qu'au domaine des peintures, et des matières polymères après, éventuellement, élimination de la phase aqueuse.

Ces buts sont atteints grâce à l'utilisation dans le procédé de broyage selon l'invention de l'agent selon l'invention, qui résulte de la polymérisation et/ou de la copolymérisation de monomères acryliques et/ou vinyliques, suivie d'un fractionnement par un ou plusieurs solvants polaires selon des procédés connus de l'homme de l'art.

Cet agent selon l'invention se caractérise en ce qu'il est formé par la fraction desdits polymères et/ou copolymères acides dont les sites acides actifs sont partiellement ou complètement neutralisés avec un taux de neutralisation des sites acides actifs par un agent de neutralisation disposant de l'ion magnésium allant de 40 à 55 % bornes incluses et un taux de neutralisation des sites acides actifs par un agent de neutralisation disposant de l'ion sodium pouvant aller jusqu'à 60%. Ces polymères et/ou copolymères acryliques sont obtenus selon des procédés connus de la polymérisation radicalaire, en présence de régulateurs de polymérisation tels que par exemple des composés organiques à base d'hydroxylamine et en présence d'initiateurs de polymérisation tels que les peroxydes et les persels, par exemple l'eau oxygénée, le persulfate, l'hypophosphite de sodium, l'acide hypophosphoreux, de l'un au moins des monomères et/ou comonomères suivants : acide acrylique et/ou méthacrylique, itaconique, crotonique, fumarique, anhydride maléique, ou encore isocrotonique, aconitique, mésaconique, sinapique, undécylénique, angélique, canellique, hydroxyacrylique, sous forme acide ou partiellement neutralisée, l'acroléine, l'acrylamide, l'acrylonitrile, les esters des acides acrylique et méthacrylique, et en particulier le méthacrylate de diméthylaminoéthyle, vinylpyrrolidone, vinylcaprolactame, l'éthylène, le propylène, l'isobutylène, le diisobutylène, l'acétate de vinyle, le styrène, l'alphaméthylstyrène, la méthylvinylcétone, dans un milieu de polymérisation qui peut être l'eau, le méthanol, l'éthanol, le propanol, l'isopropanol, les butanols, ou leurs mélanges, ou encore le diméthylformamide, le diméthylsulfoxyde, le tétrahydrofurane, l'acétone, la méthyléthylcétone, l'acétate d'éthyle, l'acétate de butyle, l'hexane, l'heptane, le benzène, le toluène, le xylène, le mercaptoéthanol, le tertiododécylmercaptan, l'acide thioglycolique et ses esters, le n-dodécylmercaptan, les acides acétique, tartrique, lactique, citrique, gluconique, glucoheptonique, l'acide 2-mercaptopropionique, le thiodiéthanol, les solvants halogénés comme le tétrachlorure de carbone, le chloroforme, le chlorure de méthylène, les éthers de monopropylène glycol, diéthylèneglycol ou leur mélange.

La solution du polymérisat acide ainsi obtenu est éventuellement neutralisée partiellement ou totalement à raison de 40 à 55 % avec un agent de neutralisation contenant l'ion magnésium, et d'une quantité inférieure ou égale à 60% avec un agent de neutralisation contenant l'ion sodium.

La solution du polymérisat acide ou ainsi neutralisé est ensuite traitée selon des procédés statiques ou dynamiques connus de l'homme de l'art, par un ou plusieurs solvants polaires appartenant notamment au groupe constitué par le méthanol, l'éthanol, le propanol, l'isopropanol, les butanols, l'acétone, le tétrahydrofurane, produisant ainsi une séparation en deux phases :

- la phase la moins dense, comportant la majeure fraction du solvant polaire et la fraction de polymère et/ou copolymère acrylique de bas poids moléculaire,
- la phase aqueuse la plus dense comportant la fraction de polymère et/ou copolymère acrylique de plus haut poids moléculaire.

On recueille la fraction désirable constituée des polymères et/ou copolymères acryliques selon l'invention, dont la viscosité spécifique se situe entre 0,3 et 0,8.

Cette viscosité spécifique des polymères et/ou copolymères acryliques symbolisée par la lettre "η" est déterminée de la manière suivante.

On prend un échantillon de la solution de la fraction des polymères et/ou copolymères recueillie de façon à obtenir une solution correspondant à 2,5 g de polymère sec et à 50 ml d'une solution de chlorure de sodium à 60 g/l. Puis on mesure avec un viscosimètre capillaire de constante de Baume égale à 0,000105 placé dans un bain thermostaté à 25°C le temps d'écoulement d'un volume donné de la solution précitée contenant le polymère et/ou copolymère acrylique, ainsi que le temps d'écoulement du même volume de solution aqueuse de chlorure de sodium dépourvue dudit polymère et/ou copolymère. Il est alors possible de définir la viscosité "η" grâce à la relation suivante :

$$\eta = \frac{\text{(temps d'écoulement de la solution de polymère) - (temps d'écoulement de la solution NaCl)}}{\text{temps d'écoulement de la solution NaCl}}$$

Le tube capillaire est généralement choisi de telle manière que le temps d'écoulement de la solution de NaCl, dépourvue de polymère et/ou copolymère, soit d'environ 90 à 100 secondes, donnant ainsi des mesures de viscosité spécifique d'une très bonne précision.

La température à laquelle s'effectue le traitement de sélection de la fraction de polymère et/ou copolymère acrylique acide ou alcalin n'est pas critique par elle-même, puisqu'elle influence le seul coefficient de partage. Elle est comprise entre 10 et 80°C, et de préférence entre 20°C et 60°C.

Par contre, le rapport des quantités d'eau de dilution et de solvants polaires est prépondérant, puisqu'il influence directement la séparation. De même, lorsque la séparation est effectuée de manière continue au moyen d'un extracteur centrifuge, c'est-à-dire par un procédé dynamique, les rapports des fractions extraites sont dépendants des conditions de centrifugation.

Il est également possible et souhaitable dans certains cas d'affiner encore la sélection de la fraction des polymères et/ou copolymères acryliques en traitant à nouveau la phase aqueuse la plus dense précédemment recueillie, au moyen d'une nouvelle quantité de solvant polaire, qui peut être différent de celui ou ceux initialement utilisés, ou qui peut encore être un mélange de solvants polaires.

La phase liquide obtenue après traitement peut être soumise à distillation pour éliminer le ou les solvants utilisés pour le traitement.

La phase aqueuse contenant la fraction des polymères et/ou copolymères acryliques de viscosité spécifique comprise entre 0,3 et 0,8, correspondant à une masse moléculaire moyenne en poids ($\overline{Mw}$ comprise entre 1 000 et 10 000, peut être utilisée sous cette forme comme agent de broyage des substances minérales à porphyriser; mais elle peut également être traitée par tous moyens connus pour en éliminer la phase aqueuse et isoler le polymère et/ou copolymère acrylique sous la forme d'une fine poudre qui peut être utilisée sous cette autre forme comme agent de broyage.

En pratique, l'opération de broyage de la substance minérale à affiner consiste à broyer la substance minérale avec un corps broyant en particules très fines dans un milieu aqueux contenant l'agent de broyage. On forme une suspension aqueuse de la substance minérale à broyer, dont les grains ont une dimension initiale au plus égale à 50 microns, en une quantité telle que la concentration en matière sèche de ladite suspension est d'au moins 70% en poids.

A la suspension de la substance minérale à broyer, on ajoute le corps broyant de granulométrie avantageusement comprise entre 0,20 millimètre et 4 millimètres. Le corps broyant se présente en général sous la forme de particules de matériaux aussi divers que l'oxyde de silicium, l'oxyde d'aluminium, l'oxyde de zirconium ou de leurs mélanges ainsi que les résines synthétiques de haute dureté, les aciers, ou autres. Un exemple de composition de tels corps broyants est donné par le brevet FR2203681 qui décrit des éléments broyants formés de 30 à 70% en poids d'oxyde de zirconium, 0,1 à 5% d'oxyde d'aluminium et de 5 à 20% d'oxyde de silicium. Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à microéléments.

L'agent de broyage et/ou de dispersion selon l'invention est également introduit au sein du mélange formé par la suspension aqueuse de substances minérales et par le corps broyant à raison de 0,2 à 2% en poids de la fraction séchée desdits polymères par rapport à la masse sèche de la substance minérale à affiner.

Le temps nécessaire pour aboutir à une excellente finesse de la substance minérale après broyage varie selon la nature et la quantité des substances minérales à porphyriser, et selon le mode d'agitation utilisé et la température du milieu pendant l'opération de broyage.

Les substances minérales à affiner peuvent être d'origines très diverses telles que le carbonate de calcium et les dolomies, le sulfate de calcium, le kaolin, le dioxyde de titane, c'est-à-dire toutes les substances minérales qui doivent être broyées pour être utilisables dans des applications aussi diversifiées que l'enduction des papiers, la pigmentation des peintures et enduits, la charge des caoutchoucs ou résines synthétiques, la matification des textiles synthétiques, ou autres.

Ainsi, l'application de l'agent de broyage et/ou de dispersion selon l'invention autorise la transformation par broyage en suspension aqueuse de haute concentration en matière sèche de substances minérales grossières en des particules très fines, dont 90% au moins d'entre elles ont une dimension toujours inférieure à deux microns, et dont 60% au moins d'entre elles ont une dimension inférieure à un micron, et d'obtenir une suspension de substances minérales très fines dont la viscosité est faible et stable dans le temps.

La portée et l'intérêt de l'invention seront mieux perçus grâce aux exemples suivants.

**Exemple 1**

Cet exemple concerne la préparation d'une suspension de carbonate de calcium grossier soumise à un broyage pour l'affiner en une suspension microparticulaire. Dans ce but, une suspension de carbonate de calcium grossier a été préparée à partir d'un carbonate de calcium naturel de diamètre moyen 50 micromètres, en mettant en oeuvre :

- pour l'essai n°1 illustrant l'art antérieur, la fraction la plus dense d'un polyacrylate de sodium résultant d'un fractionnement à l'isopropanol d'un polyacrylate de sodium de viscosité spécifique 0,525 obtenu par polymérisation radicalaire et neutralisation totale (100% des sites acides actifs) par de l'hydroxyde de sodium,
- pour l'essai n°2 illustrant également l'art antérieur, la fraction la plus dense d'un polyacrylate mixte de sodium et de calcium résultant d'un fractionnement à l'isopropanol d'un polycrylate mixte de sodium et de calcium de viscosité spécifique 0,525 obtenu par polymérisation radicalaire et neutralisation totale par de la soude et de la chaux dans un rapport correspondant à une neutralisation des sites acides actifs à raison de 70% de sodium-30% de calcium,
- pour l'essai n°3 illustrant toujours l'art antérieur, la fraction la plus dense d'un polyacrylate de sodium résultant d'un fractionnement à l'isopropanol d'un polyacrylate de sodium de viscosité spécifique 0,525 obtenu par polymérisation radicalaire et neutralisation partielle (66% des sites acides actifs) par de l'hydroxyde de sodium,
- pour l'essai n°4 illustrant l'invention, la fraction la plus dense d'un polyacrylate mixte de sodium et de magnésium résultant d'un fractionnement à l'isopropanol d'un polyacrylate mixte de sodium et de magnésium de viscosité spécifique 0,525 obtenu par neutralisation totale (100% des sites acides actifs) par de la soude et de la magnésie dans un rapport correspondant à une neutralisation des sites acides actifs à raison de 50% par le sodium - 50% par le magnésium.

Pour chaque essai, on a préparé une suspension aqueuse de carbonate de calcium provenant du gisement d'Orgon (France) ayant une granulométrie inférieure à 10 microns.

La suspension aqueuse a une concentration en matière sèche de 76% en poids par rapport à la masse totale.

L'agent de broyage est introduit dans cette suspension selon les quantités indiquées dans le tableau ci-après, exprimées en pour cent en poids sec par rapport à la masse de carbonate de calcium sec à broyer.

La suspension circule dans un broyeur du type Dyno-Mill à cylindre fixe et impulseur tournant dont le corps broyant est constitué par des billes de corindon de diamètre compris dans l'intervalle 0,6 millimètre à 1,0 millimètre.

Le volume total occupé par le corps broyant est de 1150 centimètres cubes tandis que sa masse est de 2900 g.

La chambre de broyage a un volume de 1400 centimètres cubes.

La vitesse circonférentielle du broyeur est de 10 mètres par seconde.

La suspension de carbonate de calcium est recyclée à raison de 18 litres par heure.

La sortie du broyeur Dyno-Mill est munie d'un séparateur de mailles 200 microns permettant de séparer la suspension résultant du broyage et le corps broyant.

La température lors de chaque essai de broyage est maintenue à 60°C environ.

A la fin du broyage (To), on récupère dans un flacon un échantillon de la suspension pigmentaire dont 80% des particules ont une dimension inférieure à un micron, et on en mesure la viscosité à l'aide d'un viscosimètre Brookfield type RVT, à une température de 20°C et une vitesse de rotation de 10 tours par minute avec le mobile adéquat.

Après un temps de repos de 8 jours dans le flacon, la viscosité de la suspension est mesurée par introduction dans le flacon non agité du mobile adéquat du viscosimètre Brookfield type RVT, à une température de 20°C et une vitesse de rotation de 10 tours par minute (viscosité AVAG = avant agitation).

Tous les résultats expérimentaux sont consignés dans le tableau 1.

## TABLEAU 1

| Essai No. | AGENT DE BROYAGE UTILISE | | | Viscosité Brookfield de la suspension (à 20°C en mPa.s) | |
| | NEUTRALISATION | | Consommation en agent en % sec/sec | To 10 T/mn | 8 jours AVAG 10 T/mn |
| | Taux de groupes acides neutralisés | Cation neutralisant | | | |
| 1 | 100 | Na | 0,86 | 1400 | 8290 |
| 2 | 70/30 | Na/Ca | 1,05 | 1250 | 2390 |
| 3 | 66 | Na | 1,25 | 1500 | 6750 |
| 4 | 50/50 | Na/Mg | 0,98 | 1040 | 1040 |

Essais 1, 2, 3 : Art antérieur
Essai 4 : Invention

AVAG : Mesure de la viscosité avant agitation de la suspension

La lecture du tableau 1 permet de constater que seule la suspension de carbonate de calcium broyé par l'agent selon l'invention (essai n°4) a une viscosité Brookfield mesurée à 10 tours par minute après 8 jours de repos et sans agitation préalable nettement inférieure à 2 000 mPa.s alors que tous les essais des exemples effectués au moyen d'un agent de l'art antérieur donnent des viscosités supérieures à 2 000 mPa.s.

Ainsi, la lecture du tableau 1 permet de constater l'augmentation de viscosité dans les suspensions de carbonate de calcium broyé au moyen des agents de l'art antérieur alors que l'agent de broyage et/ou de dispersion, selon l'invention, permet d'obtenir la stabilité de la viscosité des suspensions de carbonate de calcium avant même toute agitation.

### Exemple 2

Un deuxième groupe d'essais (essais n°5 à n°12) concerne la préparation et le broyage de la suspension aqueuse du même carbonate de calcium à la même concentration de matière sèche en présence de la fraction la plus dense obtenue par fractionnement à l'isopropanol du même acide polyacrylique de viscosité spécifique 0,525 neutralisé par des taux variables de magnésium.

Ces essais ont été exécutés selon les mêmes critères expérimentaux que ceux de l'exemple 1.

Tous les résultats expérimentaux sont consignés dans le tableau 2.

## TABLEAU 2

| Essai No. | AGENT DE BROYAGE UTILISE | | | Viscosité Brookfield de la suspension (à 20°C en mPa.s) | | |
| | NEUTRALISATION | | Consommation en agent en % sec/sec | To 10 T/mn | 8 jours AVAG 10 T/mn | |
| | Taux de groupes acides neutralisés | Cation neutralisant | | | | |
| 5 | 70/30 | Na/Mg | 1,05 | 1330 | 3590 | |
| 6 | 60/40 | Na/Mg | 1,03 | 1200 | 1900 | |
| 7 | 55/45 | Na/Mg | 0,9 | 1210 | 1510 | |
| 8 | 50/50 | Na/Mg | 0,98 | 1040 | 1040 | |
| 9 | 45/55 | Na/Mg | 1,02 | 1250 | 1190 | Invention |
| 10 | 40/60 | Na/Mg | 1,09 | 1390 | 1635 | |
| 11 | 30/70 | Na/Mg | 1,16 | 1160 | 1730 | |
| 12 | 50/45 | Na/Mg | 1,08 | 1420 | 1900 | Invention |

AVAG : Mesure de la viscosité avant agitation de la suspension

La lecture du tableau 2 permet de constater les résultats rhéologiques exceptionnels de l'invention, ainsi que de constater que l'utilisation de l'agent selon l'invention permet de franchir un seuil de rentabilité lors d'essais pratiques. En effet, deux critères sont pris en compte par l'utilisateur, l'aspect économique et l'aspect rhéologique. Un surdosage de l'agent de broyage entraîne un surcoût dans la production de suspensions affinées de carbonate de calcium.

Ainsi, la consommation d'agent de broyage et/ou de dispersion dans l'opération de broyage selon l'invention ne doit pas dépasser environ 1,1% d'agent dispersant sec par rapport au poids sec de carbonate de calcium pour l'obtention d'une suspension dont 80% des particules sont inférieures à 1 micron et de concentration en matière sèche de 76%. Les essais n° 6 et n° 9 délimitent alors les bornes de l'invention.

Quant à l'aspect rhéologique, l'utilisateur ayant à manipuler des suspensions concentrées stockées depuis plusieurs jours sans agitation souhaite avoir des suspensions dont la viscosité est quasiment identique à celle des suspensions sortant du broyeur et toujours inférieure à 2000 mPa.s. C'est ce résultat exceptionnel qui est obtenu pour la première fois par l'utilisation de l'agent selon l'invention (essais n°6 à 9 et 12, et notamment les essais 7 à 9).

## Exemple 3

Cet exemple (essais n°13 - 14) concerne la préparation et le broyage de la suspension aqueuse du même carbonate de calcium à la même concentration de matière sèche en présence de la fraction la plus dense obtenue par fractionnement à l'isopropanol du même acide polyacrylique de viscosité spécifique 0,525 neutralisé par différents agents de neutralisation contenant des ions de fonction polyvalente autres que le magnésium et tel que le calcium.

Ainsi, le broyage de l'essai n°13 est effectué en utilisant la même fraction d'acide polyacrylique précitée et neutralisée par de la soude et de la chaux dans un rapport correspondant à une neutralisation des sites acides actifs à raison de 70% par le sodium - 30% par le calcium, tandis que l'essai n°14 concerne cette même fraction d'acide polyacrylique neutralisée par de la soude et de la chaux dans un rapport correspondant à une neutralisation des sites acides actifs à raison de 55% par le sodium - 45% par le calcium.

Ces essais ont été exécutés selon les mêmes critères expérimentaux que ceux de l'exemple 1.

Tous les résultats sont consignés dans le tableau 3.

## TABLEAU 3

| Essai No. | AGENT DE BROYAGE UTILISE | | | Viscosité Brookfield de la suspension (à 20°C en mPa.s) | |
|---|---|---|---|---|---|
| | NEUTRALISATION | | Consommation en agent en % sec/sec | To 10 T/mn | 8 jours AVAG 10 T/mn |
| | Taux de groupes acides neutralisés | Cation neutralisant | | | |
| 13 | 70/30 | Na/Ca | 1,05 | 1250 | 2390 |
| 14 | 55/45 | Na/Ca | 1,3 | 1500 | 3300 |
| 7 Invention | 55/45 | Na/Mg | 0,9 | 1210 | 1510 |

AVAG : Mesure de la viscosité avant agitation de la suspension

La lecture du tableau 3 permet de constater que l'utilisation d'un autre cation polyvalent neutralisant tel que le calcium, même à différents taux, n'aboutit pas à une suspension de carbonate de calcium affinée de viscosité Brookfield mesurée à 10 tours par minute après 8 jours de repos et sans agitation préalable inférieure à 2 000 mPa.s (essais n°13 et 14).

### Exemple 4

Cet exemple (essais n° 15-17) concerne la préparation et le broyage de la suspension aqueuse du même carbonate de calcium à la même concentration de matière sèche en présence de la fraction la plus dense obtenue par fractionnement à l'isopropanol du même acide polyacrylique de viscosité spécifique 0,525 neutralisé à 50% par l'ion magnésium et à 50% par différents agents de neutralisation monovalents.

Ces différents agents de neutralisation monovalents sont l'ammonium pour l'essai n°15, le lithium pour l'essai n°16, le potassium pour l'essai n°17.

Ces essais ont été exécutés selon les mêmes critères expérimentaux que ceux de l'exemple 1.

Tous les résultats sont consignés dans le tableau 4.

## TABLEAU 4

| Essai No. | AGENT DE BROYAGE UTILISE | | Consommation en agent en % sec/sec | Viscosité Brookfield de la suspension (à 20°C en mPa.s) | |
| --- | --- | --- | --- | --- | --- |
| | NEUTRALISATION | | | To 10 T/mn | 8 jours AVAG 10 T/mn |
| | Taux de groupes acides neutralisés | Cation neutralisant | | | |
| 15 | 50/50 | NH₄/Mg | Impossibilité d'obtenir une granulométrie équivalente à 80% < 1µm | | |
| 16 | 50/50 | Li/Mg | 0,89 | 1620 | 3800 |
| 17 | 50/50 | K/Mg | 1,11 | 1800 | 2700 |

AVAG : Mesure de la viscosité avant agitation de la suspension

La lecture du tableau 4 permet de constater qu'on ne peut pas remplacer avantageusement l'ion sodium par un autre ion monovalent.

**Revendications**

1. Agent de broyage et/ou de dispersion en suspension aqueuse de matériaux minéraux grossiers destinés à des applications pigmentaires, constitué par les polymères et/ou copolymères acryliques et/ou vinyliques comportant des groupes acides partiellement ou totalement neutralisés résultant du traitement par un ou plusieurs solvants polaires, selon des procédés statiques ou dynamiques, de polymères et/ou copolymères acryliques et/ou vinyliques et de la sélection de la fraction de poids moléculaire désirable, caractérisé en ce que les sites acides actifs dudit agent sont totalement ou partiellement neutralisés par un agent de neutralisation contenant l'ion magnésium, de telle sorte que le pourcentage de neutralisation des sites acides actifs par l'ion magnésium varie entre 40 et 55 %, bornes incluses, et par un agent de neutralisation disposant de l'ion sodium pouvant neutraliser jusqu'à 60% des sites acides actifs dudit agent.

2.  Agent de broyage et/ou de dispersion en suspension aqueuse de matériaux minéraux grossiers selon la revendication 1, caractérisé en ce que les sites acides actifs du dit agent sont partiellement neutralisés par un agent de neutralisation contenant l'ion magnésium, de telle sorte que le pourcentage de neutralisation des sites acides actifs par l'ion magnésium varie entre 40 et 55 %, bornes incluses, et par un agent de neutralisation disposant de l'ion sodium pouvant neutraliser jusqu'à 60% des sites acides actifs dudit agent.

3.  Agent de broyage et/ou de dispersion en suspension aqueuse de matériaux minéraux grossiers selon la revendication 1, caractérisé en ce que les sites acides actifs du dit agent sont totalement neutralisés par un agent de neutralisation contenant l'ion magnésium, de telle sorte que le pourcentage de neutralisation des sites acides actifs par l'ion magnésium varie entre 40 et 55 %, bornes incluses, et par un agent de neutralisation disposant de l'ion sodium neutralisant les 60% à 45% des sites acides actifs restants.

4.  Agent de broyage et/ou de dispersion en suspension aqueuse de matériaux minéraux grossiers selon la revendication 1, caractérisé en ce que les sites acides actifs du dit agent sont totalement neutralisés par un agent de neutralisation contenant l'ion magnésium, de telle sorte que le pourcentage de neutralisation des sites acides actifs par l'ion magnésium varie entre 45% et 55%, bornes incluses, et par un agent de neutralisation disposant de l'ion sodium neutralisant les 55% à 45% des sites acides actifs restants.

5.  Agent de broyage et/ou de dispersion en suspension aqueuse de matériaux minéraux grossiers selon les revendications 1 à 4, caractérisé en ce que ledit agent a une viscosité spécifique comprise entre 0,3 et 0,8.

6.  Agent de broyage et/ou de dispersion en suspension aqueuse de matériaux minéraux grossiers selon la revendication 5, caractérisé en ce qu'il est une solution.

7.  Agent de broyage et/ou de dispersion en suspension aqueuse de matériaux minéraux grossiers selon la revendication 5, caractérisé en ce qu'il est une poudre.

8.  Procédé de broyage en suspension aqueuse de matériaux minéraux grossiers destinés à des applications pigmentaires consistant à préparer une suspension aqueuse de ces matériaux, à introduire un agent de broyage constitué des polymères et/ou copolymères acryliques et/ou vinyliques comportant des groupes acides partiellement ou totalement neutralisés résultant du traitement par un ou plusieurs solvants polaires selon des procédés statiques ou dynamiques de polymères acryliques et/ou vinyliques et de la sélection de la fraction de poids moléculaire désirable, à ajouter à la suspension un corps broyant et à soumettre le mélange ainsi réalisé à une action de broyage, caractérisé en ce que ledit agent de broyage est tel que décrit dans l'une quelconque des revendications 1 à 7.

9.  Procédé de broyage en suspension aqueuse de matériaux minéraux grossiers selon la revendication 8, caractérisé en ce que l'agent de broyage est introduit au sein de la suspension à raison de 0,2% à 2% en poids sec dudit polymère par rapport au poids sec de la substance minérale à broyer.

10. Procédé de broyage en suspension aqueuse de matériaux minéraux grossiers selon l'une quelconque des revendications 8 ou 9, caractérisé en ce que la suspension aqueuse de matériaux minéraux à broyer comporte au moins 70% en poids de matières sèches.

11. Suspension aqueuse de matériaux minéraux affinés à l'aide du procédé de broyage selon l'une quelconque des revendications 8 à 10, caractérisée en ce que 90% au moins des particules de la substance broyée ont une dimension inférieure à deux microns et 60% au moins d'entre elles ont une dimension inférieure à un micron.

12. Suspension aqueuse de matériaux minéraux affinés selon la revendication 11, caractérisée en ce que la viscosité Brookfield de ladite suspension mesurée sans agitation après au moins 8 jours de stockage ne dépasse pas 2000 mPa.s à 10 tours par minute.

**13.** Application de la suspension aqueuse de matériaux minéraux affinés selon les revendications 11 et 12 au domaine de la charge de masse, au couchage du papier, de la peinture et du plastique.

## Patentansprüche

**1.** Mittel zur Zerkleinerung und/oder zum Dispergieren von grobem mineralischem Material, das zur Anwendung als Pigment vorgesehen ist, das aus Acryl- und/oder Vinyl-Polymeren und/oder -Copolymeren aufgebaut ist, die teilweise oder vollständig neutralisierte saure Gruppen tragen, die durch Behandlung von Acryl- und/oder Vinyl-Polymeren und/oder -Copolymeren in einem statischen oder dynamischen Verfahren mit einem oder mehreren polaren Lösungsmitteln und Auswahl der Fraktion mit dem gewünschten Molekulargewicht entstanden sind, in wäßriger Suspension, **dadurch gekennzeichnet**, daß die aktiven sauren Stellen dieses Mittels vollständig oder teilweise neutralisiert wurden mit einem Neutralisierungsmittel, das Magnesiumionen enthält, in solcher Weise, daß der Prozentanteil der durch Magnesiumionen neutralisierten aktiven sauren Stellen zwischen 40 und 55 % liegt, wobei die Grenzen eingeschlossen sind, und mit einem Neutralisierungsmittel, das Natriumionen bereitstellt, das bis zu 60 % der aktiven sauren Stellen des Mittels neutralisieren kann.

**2.** Mittel zur Zerkleinerung und/oder zum Dispergieren von grobem mineralischem Material in einer wäßrigen Suspension nach Anspruch 1, **dadurch gekennzeichnet**, daß die aktiven sauren Stellen dieses Mittels teilweise neutralisiert wurden mit einem Neutralisierungsmittel, das Magnesiumionen enthält, in solcher Weise, daß der Prozentanteil der durch Magnesiumionen neutralisierten aktiven sauren Stellen zwischen 40 und 55 % liegt, wobei die Grenzen eingeschlossen sind, und mit einem Neutralisierungsmittel, das Natriumionen bereitstellt, das bis zu 60 % der aktiven sauren Stellen des Mittels neutralisieren kann.

**3.** Mittel zur Zerkleinerung und/oder zum Dispergieren von grobem mineralischem Material in wäßriger Suspension nach Anspruch 1, **dadurch gekennzeichnet**, daß die aktiven sauren Stellen dieses Mittels vollständig neutralisiert wurden mit einem Neutralisierungsmittel, das Magnesiumionen enthält, in solcher Weise, daß der Prozentanteil der durch Magnesiumionen neutralisierten aktiven sauren Stellen zwischen 40 und 55 % liegt, wobei die Grenzen eingeschlossen sind, und mit einem Neutralisierungsmittel, das Natriumionen bereitstellt, das 60 - 45 % der verbleibenden aktiven sauren Stellen neutralisiert.

**4.** Mittel zur Zerkleinerung und/oder zum Dispergieren von grobem mineralischem Material in wäßriger Suspension nach Anspruch 1, **dadurch gekennzeichnet**, daß die aktiven sauren Stellen dieses Mittels vollständig neutralisiert wurden mit einem Neutralisierungsmittel, das Magnesiumionen enthält, in solcher Weise, daß der Prozentanteil der durch Magnesiumionen neutralisierten aktiven sauren Stellen zwischen 45 und 55 % liegt, wobei die Grenzen eingeschlossen sind, und mit einem Neutralisierungsmittel, das Natriumionen bereitstellt, das 55 bis 45 % der verbleibenden aktiven sauren Stellen neutralisiert.

**5.** Mittel zur Zerkleinerung und/oder zum Dispergieren von grobem mineralischem Material in wäßriger Suspension nach einem der Ansprüche 1 bis 4, **dadurch gekennzeichnet**, daß das Mittel eine spezifische Viskosität von 0,3 bis 0,8 hat.

**6.** Mittel zur Zerkleinerung und/oder zum Dispergieren von grobem mineralischem Material in wäßriger Suspension nach Anspruch 5, **dadurch gekennzeichnet**, daß es eine Lösung ist.

**7.** Mittel zur Zerkleinerung und/oder zum Dispergieren von grobem mineralischem Material in wäßriger Suspension nach Anspruch 5, **dadurch gekennzeichnet**, daß es ein Pulver ist.

**8.** Verfahren zur Zerkleinerung von grobem mineralischem Material, das zur Anwendung als Pigment vorgesehen ist, in wäßriger Suspension, das daraus besteht, daß man eine wäßrige Suspension des Materials herstellt, ein Zerkleinerungsmittel einführt, das aus Acryl- und/oder Vinyl-Polymeren und/oder -Copolymeren aufgebaut ist, die teilweise oder vollständig neutralisierte saure Gruppen tragen, die durch Behandlung von Acryl- und/oder Vinyl-Polymeren in einem statischen oder dynamischen Verfahren mit einem oder mehreren polaren Lösungsmitteln und Auswahl der Fraktion mit dem gewünschten Molekulargewicht erhalten wurden, der Suspension Mahlkörper zugibt und die Mischung einer Zerkleinerungswirkung unterzieht, **dadurch gekennzeichnet**, daß das Zerkleinerungsmittel eines, wie in einem der Ansprüche 1 bis 7 beschrieben, ist.

**9.** Verfahren zur Zerkleinerung von grobem mineralischem Material in wäßriger Suspension nach Anspruch 8, **da-**

**durch gekennzeichnet**, daß das Zerkleinerungsmittel in die Suspension in einem Anteil von 0,2 % bis 2 % bezogen auf das Trockengewicht des Polymers pro Trockengewicht der zu zerkleinernden mineralischen Substanz eingeführt wird.

10. Verfahren zur Zerkleinerung von grobem mineralischem Material in wäßriger Suspension nach einem der Ansprüche 8 oder 9, **dadurch gekennzeichnet**, daß die wäßrige Suspension des zu zerkleinernden mineralischen Materials mindestens 70 Gew.-% Trockensubstanz enthält.

11. Wäßrige Suspension von mit Hilfe des Zerkleinerungsverfahren nach einem der Ansprüche 8 bis 10 verfeinertem mineralischem Material, **dadurch gekennzeichnet**, daß mindestens 90 % der Teilchen der zerkleinerten Substanz eine Größe kleiner 2 μm haben, und mindestens 60 % davon eine Größe kleiner 1 μm haben.

12. Wäßrige Suspension von mineralischem Material, das gemäß Anspruch 11 verfeinert wurde, **dadurch gekennzeichnet**, daß die Brookfield-Viskosität der Suspension, die ohne Bewegung nach mindestens 8 Tagen Lagerung gemessen wird, 2.000 mPa·s bei 10 Umdrehungen pro Minute nicht überschreitet.

13. Anwendung der wäßrigen Suspension von mineralischem Material, das gemäß einem der Ansprüche 11 oder 12 verfeinert wurde, als Massenfüllstoff, zum Beschichten von Papier, für Anstriche und für Kunststoff.

## Claims

1. An agent for grinding and/or dispersing coarse mineral substances in aqueous suspension, intended for applications involving pigments, consisting of acrylic and/or vinyl polymers and/or copolymers comprising partially or fully neutralised acid groups obtained by treating acrylic and/or vinyl polymers and/or copolymers with one or more polar solvents using static or dynamic methods and selecting the fraction having the requisite molecular weight, characterised in that the active acid sites of the said agent are fully or partially neutralised by a neutralising agent containing the magnesium ion such that the percentage of neutralisation of the active acid sites by the magnesium ion varies between 40 and 55 %, boundary areas included, and by a neutralising agent having the sodium ion capable of neutralising up to 60 % of the active acid sites of the said agent.

2. An agent for grinding and/or dispersing coarse mineral substances in aqueous suspension as claimed in claim 1, characterised in that the active acid sites of the said agent are partially neutralised by a neutralising agent containing the magnesium ion such that the percentage of neutralisation of the active acid sites by the magnesium ion varies between 40 and 55 %, boundary areas included, and by a neutralising agent having the sodium ion capable of neutralising up to 60 % of the active acid sites of the said agent.

3. An agent for grinding and/or dispersing coarse mineral substances in aqueous suspension as claimed in claim 1, characterised in that the active acid sites of the said agent are fully neutralised by a neutralising agent containing the magnesium ion such that the percentage of neutralisation of the active acid sites by the magnesium ion varies between 40 and 55 %, boundary areas included, and by a neutralising agent having the sodium ion to neutralise the remaining 60 % to 45 % of active acid sites.

4. An agent for grinding and/or dispersing coarse mineral substances in aqueous suspension as claimed in claim 1, characterised in that the active acid sites of the said agent are fully neutralised by a neutralising agent containing the magnesium ion such that the percentage of neutralisation of the active acid sites by the magnesium ion varies between 45 % and 55 %, boundary areas included, and by a neutralising agent having the sodium ion to neutralise the remaining 55 % to 45 % of active acid sites.

5. An agent for grinding and/or dispersing coarse mineral substances in aqueous suspension as claimed in claims 1 to 4, characterised in that the said agent has a specific viscosity ranging between 0.3 and 0.8.

6. An agent for grinding and/or dispersing coarse mineral substances in aqueous suspension as claimed in claim 5, characterised in that it is a solution.

7. An agent for grinding and/or dispersing coarse mineral substances in aqueous suspension as claimed in claim 5, characterised in that it is a powder.

8. A method of grinding coarse mineral substances in aqueous suspension intended for applications involving pigments, which consists in preparing an aqueous suspension of these substances, introducing a grinding agent consisting of acrylic and/or vinyl polymers and/or copolymers comprising partially or fully neutralised acid groups obtained by treating acrylic and/or vinyl polymers and/or copolymers with one or more polar solvents using static or dynamic methods and selecting the fraction with the requisite molecular weight, adding to the suspension a grinding medium and subjecting the mixture so obtained to a grinding action, characterised in that the said grinding agent is as described in any one of claims 1 to 7.

9. A method of grinding coarse mineral substances in aqueous suspension as claimed in claim 8, characterised in that the crushing agent is introduced into the suspension in a quantity of from 0.2 % to 2 % by dry weight of the said polymer relative to the dry weight of the mineral substance to be ground.

10. A method of grinding coarse mineral substances in aqueous suspension as claimed in any one of claims 8 or 9, characterised in that the aqueous suspension of mineral substances to be ground comprises at least 70 % by weight of dry substances.

11. An aqueous suspension of mineral substances refined by means of the grinding method as claimed in any one of claims 8 to 10, characterised in that 90 % at least of the particles of the ground substance are of a dimension smaller than two microns and at least 60 % thereof are of a dimension smaller than one micron.

12. An aqueous suspension of refined mineral substances as claimed in claim 11, characterised in that the Brookfield viscosity of the said suspension, measured without agitation after storing for at least 8 days, is not more than 2000 mPa.s at 10 revolutions per minute.

13. Application of the aqueous suspension of ground mineral substances as claimed in claims 11 and 12 as a substance filler in the field of paper coating, paints and plastics and paper manufacturing.